# EUROPEAN PATENT SPECIFICATION

(11) **EP 1 973 965 B1**
(45) Date of publication and mention of the grant of the patent: **26.08.2009**
(21) Application number: 07717812.7
(22) Date of filing: 05.01.2007
(51) Int. Cl.: C08J 9/00

(54) **NON-HALOGEN FLAME RETARDANT ADDITIVES FOR USE IN RIGID POLYURETHANE FOAM**
NICHT HALOGENE, FLAMMHEMMENDE ZUSÄTZE ZUR VERWENDUNG IN FESTEM POLYURETHANSCHAUM
ADDITIFS IGNIFUGEANTS NON-HALOGENES POUR MOUSSE DE POLYURETHANE RIGIDE

(30) Priority: 06.01.2006 US 757064 P
(43) Date of publication of application: 01.10.2008
(73) Proprietor: Supresta LLC, Ardsley, NY 10502 (US)
(72) Inventor: STOWELL, Jeffrey, K., Wingdale, New York 12594 (US); DE KLEINE, Lambertus, A., NL-7559 LM Hengelo (NL); WILLIAMS, Barbara, A., New York, New York 10032 (US)
(74) Representative: van Heuvel, Margaretha
(86) International application number: PCT/US2007/000443
(87) International publication number: WO 2007/081903

(56) References cited:
- EP-A1- 0 108 713
- US-A- 5 624 968

## Description

### BACKGROUND OF THE INVENTION

### 1. Field of the Invention

The present invention relates to flame retarded rigid polyurethane foam compositions and a process for making flame retarded rigid polyurethane foam.

### 2. Description of Related Art

Polyurethanes are polymers produced by the reaction of an isocyanate and a hydroxyl-containing material, such as a polyol. Rigid polyurethane foams are used in many sectors, for example in the refrigeration industry, as insulating materials for construction, for example for heating units or composites, as packaging, and generally as industrial insulation. Rigid polyurethane foams generally have to be provided with flame-retardants in order to achieve the high fire-protection requirements desirable in these sectors and sometimes required by legislation. Accordingly, flame-retardant additives are often used to reduce the risk and severity of polyurethane foam combustion. A wide variety of different flame retardants are known and commercially available for this purpose. However, there are often considerable technical problems and toxicological concerns restricting the use of these flame-retardants.

Flame-retardant additives commonly used to make flame retarded polyurethane foams typically contain halogens. Examples of phosphorous containing flame-retardants used in making flame retarded polyurethane, including halogenated and non-halogenated phosphorus esters, include tris(chloroethyl) phosphate; tris(chloropropyl) phosphate; 2,2-bis(chloromethyl)trimethylene bis(bis(2-chloroethyl)phosphate); dimethyl methylphosphonate; triethyl phosphate, and the like.

Halogen-free flame retarded systems are preferred in principle for reasons of environmental toxicity, and also due to their better performance in terms of the smoke density and smoke toxicity associated with fires.

Thus a need exists for a way of effectively flame retarding polyisocyanurate foams formed using an effective and environmentally friendly flame-retardant. This invention is deemed to fulfill this need.

### SUMMARY OF THE INVENTION

The invention relates to a flame retarded polyurethane foam composition as defined in claim 1 comprising an effective flame retarding amount of at least one phosphate ester additive containing alkyl and aryl group functionality, said foam having an isocyanate index of at least about 100.

The present invention also relates to a process for making flame retarded polyurethane foam as defined in claim 9 which comprises reacting a polyol with an organic isocyanate in the presence of an effective flame retarding amount of at least one phosphate ester additive containing both alkyl and aryl group functionality, wherein the index of organic isocyanate and polyol components is at least about 100.

The flame retarded polyurethane foam compositions of the present invention are halogen-free and provide for reduced costs and improved physical performance of polyurethane foams. Since many flame-retardant additives, especially alkyl phenyl phosphates, are know plasticizers, the ability to use reduced quantities of flame retardant provides better physical properties for the foams produced

According to various features, characteristics and embodiments of the present invention, which will become apparent as the description thereof proceeds, the present invention provides a flame retarded polyurethane foam composition including alkyl aryl phosphate products.

### DETAILED DESCRIPTION OF THE INVENTION

A flame retarded polyurethane foam composition as defined in claim 1 is provided comprising an effective flame retarding amount of at least one phosphate ester additive containing alkyl and aryl group functionality, said foam having an isocyanate index of at least about 100.

Also provided is a process for making a flame retarded polyurethane foam composition as defined in claim 9 which comprises reacting a polyol with an organic isocyanate in the presence of an effective flame retarding amount of at least one phosphate ester additive containing both alkyl and aryl group functionality, and wherein the index of organic isocyanate and polyol components is at least about 100.

Individual components of the flame retarded polyurethane foam composition of the invention will now be described.

### Polyisocyanate

Various organic isocyanates can be used in this invention as starting materials. The isocyanates may be any of the known aliphatic, alicyclic and aromatic types, as well as mixtures of at least two of these types, and the organic isocyanates may be used singly or two or more of any them can be combined, whether of the same or different types. Thus isocyanates conventionally used in the production of polyurethanes can be used. Non-limiting examples of suitable isocyanates for use in this invention include aromatic diisocyanates such as 2,4-tolylene diisocyanate, 2,6-tolylene diisocyanate, crude tolylene diisocyanate, diphenylmethane diisocyanate, and crude diphenylmethane diisocyanate; aromatic triisocyanates such as 4,4',4"-triphenylmethane triisocyanate, and 2,2',6-tolylene triisocyanate; aromatic tetraisocyanates such as 4,4'-dimethyldiphenylmethane-2,2',5,5'-tetraisocyanate; aliphatic isocyanates such as hexamethylene-1,6-diisocyanate; alicyclic isocyanates such as hydrogenated diphenylmethane diisocyanate; and other diisocyanates such as m-phenylene diisocyanate, naphthylene-1,5-diisocyanate, 1-methoxyphenyl-2,4-diisocyanate, 4,4'-biphenyl diisocyanate, 3,3'-dimethoxy-4,4'-biphenyl diisocyanate, and 3,3'-dimethyldiphenylmethane-4,4'-diisocyanate. Among the various isocyanates which can be used, preferred are 2,4-tolylene dilsocyanate, 2,6-tolylene diisocyanate, crude tolylene diisocyanate, diphenylmethane diisocyanate, crude diphenylmethane diisocyanate, hexamethylene-1,6-diisocyanate, and hydrogenated diphenylmethane diisocyanate.

In one embodiment of the present invention, the isocyanates for use in this invention are polymeric diphenylmethane diisocyanate products. These isocyanates are commonly referred to as MDI-type isocyanates, and are commercially available with functionalities of from 2.0 to 3.2.

In one embodiment of the present invention, the organic isocyanate and polyol components are proportioned to form an isocyanate index in the range of about 100 to about 400. In another embodiment of the present invention, the organic isocyanate and polyol components are proportioned to form an isocyanate index in the range of about 175 to about 350. In yet another embodiment of the present invention, the organic isocyanate and polyol components are proportioned to form an isocyanate index in the range of about 200 to about 300.

### Polyol

Polyols used in the practice of this invention can be any compound containing at least two functional groups that react with isocyanates to prepare a polyisocyanurate. These functional groups contain at least one active hydrogen atom, such as defined by the Zerewittinoff reaction. The active hydrogen atom is generally a hydrogen atom bonded to an oxygen, nitrogen or sulfur atom, and preferably is the hydrogen atom of a hydroxyl group.

Suitable polyols include, but are not limited to aliphatic, saccharide, or aromatic compounds having two or more hydroxyl groups in the molecule, and mixtures thereof, such as polyether polyols, polyester polyols, and castor oil. Those polyols that are conventionally used in the production of polyurethanes can also be used similarly. The polyols used may be of either lower molecular weight or high molecular weight. Specific examples thereof include, as polyether polyols, those compounds having structures of active hydrogen-containing compounds such as polyhydric alcohols, polyhydric phenols, amines, or polycarboxylic acids to which alkylene oxides are added. Suitable polyhydric alcohols include dihydric alcohols such as ethylene glycol; propylene glycol, 1,4-butanediol, 1,6-hexanediol, diethylene glycol, and neopentyl glycol; trihydric or higher polyhydric alcohols such as pentaerythritol, and sucrose. Suitable polyhydric phenols include pyrogallol, and hydroquinone; bisphenols such as bisphenol A; condensates of phenol and formaldehyde; and other similar materials. Suitable amines include ammonia, alkanolamines such as mono-, di- and triethanolamines, . isopropanolamine, and aminoethylethanolamine; C₁-C₂₂ alkylamines, C₂-C₆ alkylenediamines, polyalkylenepolyamines, aromatic amines such as aniline, phenylenediamine, diaminotoluene, xylenediamine, methylenedianiline, and diphenyletherdiamine, alicyclic amines such as isophoronediamine, and cyclohexylenediamine, heterocyclic amines, and similar substances. Suitable polycarboxylic acids include aliphatic polycarboxylic acids such as succinic acid, adipic acid, sebacic acid, maleic acid, and dimer acid, aromatic polycarboxylic acids such as phthalic acid, terephthalic acid, trimellitic acid, and pyromellitic acid, and the like. These active hydrogen-containing compounds may also be used as a mixture of two or more of them. As the alkylene oxides to be added to the active hydrogen-containing compounds, there can be cited, for example, ethylene oxide, propylene oxide, butylene oxide, tetrahydrofuran, and the like. These alkylene oxides may be used singly or two or more of them may be used in combination. In the latter case, there may be blocked adducts or randomly added products. Suitable polyester polyols include condensed polyester polyols obtained by the reaction between polyhydric alcohols (the aforementioned alcohols, trimethylolpropane, glycerol, etc.) and carboxylic acids (the aforementioned polycarboxylic acids, etc.), polyester polyols obtained by ring opening polymerization lactone, scrap PET to which ethylene oxide adduct of nonylphenol is added, and the like. Among them, aliphatic, aromatic, aliphatic or aromatic amine, pentaerythritol, or sucrose based polyether polyols; aromatic or aliphatic carboxylic acid polyester polyols; lactone polyester polyols, and the like. The aforementioned polyols may be used singly or two or more of them may be used in combination.

In one embodiment of the present invention, the polyols may have a hydroxyl number within the range of about 25 to about 600 mg KOH/g. In another embodiment of the present invention, the polyols may have a hydroxyl number within the range of about 150 to about 350 KOH/g. In yet another embodiment of the present invention, the polyols may have a hydroxyl number within the range of about 175 to about 300 mg KOH/g.

Amounts of the polyols used can vary, but in general will fall in the range of about 10 to about 50 weight percent in one embodiment of the invention. In another embodiment, the polyols will range from about 15 to about 40 weight percent, based on the total weight of flame retarded polyurethane foam composition. In yet another embodiment of the present invention, the polyols will range from about 20 to about 30 weight percent.

The polyether polyols to be used in the present invention, can be produced, for example, by an addition reaction of an alkylene oxide such as ethylene oxide or propylene oxide to a starting material which is a compound having at least two active hydrogen groups, such as a polyhydric alcohol such as ethylene glycol, propylene glycol, glycerol, trimethylol propane or pentaerythritol, an amine such as ethylenediamine, or an alkanolamine such as ethanolamine or diethanolamine, for example, by a method disclosed in "Polyurethane Handbook" edited by Gunter Oertel (1985), Hanser Publishers (Germany), p.42-53.

The polyester polyols to be used in the present invention, may be those obtainable by a reaction of a dibasic acid with glycol, as disclosed in "Polyurethane Resin Handbook" edited by Keiji Iwata, (first edition published in 1987), THE NIKKAN KOGYO SHIMBUN, LTD., p.117.

The polymer polyols to be used in the present invention, may be polymer polyols obtained by reacting the above-mentioned polyether polyol with an unsaturated monomer such as butadiene, acrylonitrile or styrene, in the presence of a radical polymerization catalyst.

### Catalyst

Catalysts of the present invention include the combination of standard tertiary amine and the organometallic polyurethane catalysts. Any of a large number or polyurethane catalysts may be utilized for producing the polyurethane foam. Typical levels are from about 0.001 to 5 percent based on the weight of the reaction mixture. Levels of about 0.001 to about 2 php are common. Relative proportions are well-known to those skilled in the art. Suitable tertiary amine catalysts used herein include: bis(2,2'-dimethylaminoethyl)ether, trimethylamine, N-methylmorpholine, N,N-ethylmorpholine, N,N-dimethylbenzylamine, N,N-dimethylethanolamine, N,N,N',N'-tetramethyl-1,3-butanediamine, pentamethyldipropylenetriamine, triethylenediamine, pyridine oxide and the like. Typically, the amine catalysts of the present invention are , bis(2,2'-dimethylaminoethyl)ether and triethylenediamine.

The organic metal catalyst is not particularly limited so long as it is a conventional one. For example, stannous diacetate, stannous dioctoate, stannous dioleate, stannous dilaurate, dibutyltin oxide, dibutyltin diacetate, dibutyltin dilaurate, dibutyltin dichloride, dioctyltin dilaurate, lead octanoate, lead naphthenate, nickel naphthenate or cobalt naphthenate are contemplated.

The metal salt of a carboxylic acid may be any conventional one. For example, an alkali metal salt or an alkaline earth metal salt of a carboxylic acid may be used. The carboxylic acid can be an aliphatic mono or dicarboxylic acid such as acetic acid, propionic acid, 2-ethylhexanoic acid or adipic acid, or an aromatic mono or dicarboxylic acid such as benzoic acid or phthalic acid. Further, as the metal to form the carboxylate, an alkali metal such as lithium, sodium or potassium, or an alkaline earth metal such as calcium or magnesium can be utilized.

Other known polyurethane catalysts also can be use in combination with the amine and organometallic catalyst described above. For example, strong bases such as alkali and alkaline earth metal hydroxides, alkoxides, and phenoxides; acidic metal salts of strong acids such as ferric chloride, stannous chloride, antimony trichloride, bismuth nitrate and chloride, and the like; chelates of various metals such as those which can be obtained from acetylacetone, benzoylacetone, trifluoroacetylacetone, ethyl acetoacetate, salicylaldehyde, cyclopentanone-2-carboxylate, acetylacetoneimine, bis-acetylaceonealkylenediimines, salicyladehydeimine, and the like, with the various metals such as Be, Mg, Zn, Cd, Pb, Ti, Zr, Sn, As, Bi, Cr, Mo, Mn, Fe, Co, Ni, or such ions as MoO₂ ++, UO₂ ++, and the like; alcoholates and phenolates of various metals such as Ti(OR)₄, Sn(OR)₄, Sn(OR)₂, Al(OR)₃, and the like, wherein R is an alkyl or aryl, and the reaction products of alcoholates with carboxylic acids, beta-diketones, and 2(N,N-dialkylamino)alkanols, such as the well.known chelates of titanium obtained by this or equivalent procedures; all can be employed in the process of the present invention.

### Blowing Agent

A blowing agent may be used in the preparation of the polyurethane of the invention. These agents include, but are not limited to hydrocarbon blowing agents, such as, linear or branched alkane hydrocarbons, e.g., butane, isobutane, 2,3-dimethylbutane, n- and isopentane and technical-grade pentane mixtures, n- and isohexanes, and n- and isoheptane. Other blowing agents can be used in combination with the one or more hydrocarbon blowing agents; these may be divided into the chemically active blowing agents which chemically react with the isocyanate or with other formulation ingredients to release a gas for foaming, and the physically active blowing agents which are gaseous at the exotherm foaming temperatures or less without the necessity for chemically reacting with the foam ingredients to provide a blowing gas. Included within the meaning of physically active blowing agents are those gases which are thermally unstable and decompose at elevated temperatures. Examples of chemically active blowing agents are preferably those which react with the isocyanate to liberate a gas, such as CO₂. Suitable chemically active blowing agents include, but are not limited to, water, mono- and polycarboxylic acids having a molecular weight of from 46 to 300, salts of these acids, and tertiary alcohols.

Water may be used as a co-blowing agent with the hydrocarbon blowing agent. Water reacts with the organic isocyanate to liberate CO₂ gas which is the actual blowing agent. However, since water consumes isocyanate groups, an equivalent molar excess of isocyanate should be provided to make up for the consumed isocyanates.

The organic carboxylic acids used as the chemically active blowing agents include, but are not limited to aliphatic mono- and polycarboxylic acids, e.g., dicarboxylic acids. Other organic mono- and polycarboxylic acids may also be used in the present invention.

Suitable carboxylic acids include substituted or unsubstituted monocarboxylic acids, e.g., formic acid, acetic acid, propionic acid, 2-chloropropionic acid, 3-chloropropionic acid, 2,2-dichloropropionic acid, hexanoic acid, 2-ethylhexanoic acid, cyclohexanecarboxylic acid, dodecanoic acid, palmitic acid, stearic acid, oleic acid, 3-mercapto-propionic acid, glycolic acid, 3-hydroxypropionic acid, lactic acid, ricinoleic acid, 2-aminopropionic acid, benzoic acid, 4-methylbenzoic acid, salicylic acid and anthranilic acid, and unsubstituted or substituted polycarboxylic acids, dicarboxylic acids, e.g., oxalic acid, malonic acid, succinic acid, fumaric acid, maleic acid, glutaric acid, adipic acid, sebacic acid, dodecanedioic acid, tartaric acid, phthalic acid, isophthalic acid and citric acid.

The salts of carboxylic acids are usually formed using tertiary amines, e.g., triethylamine, dimethylbenzylamine, diethylbenzylamine, triethylenediamine, or hydrazine. Tertiary amine salts of formic acid may be employed as chemically active blowing agents which will react with the organic isocyanate. The salts may be added as such or formed in situ by reaction between any tertiary amine (catalyst or polyol) and formic acid contained in the polyester polyol resin blend.

The foams of the present invention are generally made using a mixture of both water and physically active hydrocarbon blowing agents, such as, for example, butane, isobutane, 2,3-dimethylbutane, pentane, n and isopentane, n- and isohexanes, and n-and isohepatene, alkenes such as, 1-pentene, 2-methylbutene, 3-methylbutene, and 1-hexene,and cycloalkanes are cyclobutane, cyclopentane, cyclohexane. Preferably, n-pentane or isopentane, or mixtures thereof are employed.

The total and relative amounts of blowing agents will depend upon the desired foam density, the type of hydrocarbon blowing agent, and the amount and type of additional blowing agents employed. Rigid foam applications usually range from free rise densities of about 20 kg/m³ (1.25 pounds per ft³) to about 40 kg/m³ (2.50 pounds per ft³, preferably from about 20 kg/m³ (1.25 pounds per ft³) to about 35 kg/m³ (2.18 pounds per ft³) and overall molded densities of about 24 kg/m³ (1.50 pounds per ft³) to about 32 kg/ m³ (2.00 pounds per ft³).

### Halogen-free Flame-Retardant Phosphate Ester Compounds

The halogen-free flame retarded polyurethane foam composition of the present invention utilizes phosphorous ester flame-retardant additives. The flame-retardant additive of the flame retarded polyurethane foam composition herein is a halogen-free phosphorous ester compound which is substantially nonreactive for isocyanate, i.e., does not possess any active hydrogen-containing groups such as hydroxyl, mercapto, amino and carboxylic acid groups.

The halogen-free phosphorous ester flame- retardant additives of the present invention have the following general formula:

(R₁O)ₙP(O)(OR₂)_{3-n.}

wherein n is equal to 1 or 2, R₁ is an alkyl group containing from 1 to 6 carbon atoms, and R₂ is a phenyl group. In one aspect of the present invention, the flame-retardant phosphate esters have the general formula (R₁O)ₙP(O)(OR₂)₃₋ₙ wherein R₁ is n-butyl or an isobutyl group, and R₂ is a phenyl group.

In one embodiment of the present invention, the flame-retardant phosphate esters include, diethyl phenyl phosphate, ethyl diphenyl phosphate, di-n-propyl phenyl phosphate, n-propyl diphenyl phosphate, di-n-butyl phenyl phosphate, n-butyl diphenyl phosphate, di-isobutyl phenyl phosphate, isobutyl diphenyl phosphate, di-n-pentyl phenyl phosphate, n-pentyl diphenyl phosphate, di-n-hexyl phenyl phosphate, n-hexyl diphenyl phosphate, and mixtures thereof.

In one embodiment of the present invention, the flame-retardant alkyl phenyl phosphate esters of the flame retarded polyurethane foam composition are mixtures of n-butyl diphenyl phosphate, di-n-butyl phenyl phosphate, and triphenyl phosphate. In another embodiment of the present invention, the flame-retardant alkyl phenyl phosphate esters of the flame retarded polyurethane foam composition are mixtures of isobutyl diphenyl phosphate, diisobutyl phenyl phosphate, and triphenyl phosphate. In yet another embodiment of the invention, the flame retardant alkyl phenyl phosphate esters of the flame retarded polyurethane foam composition are mixtures of din-butyl phenyl phosphate, n-butyl diphenyl phosphate, and tributyl phosphate. In still another embodiment of the present invention, the flame retardant alkyl phenyl phosphate esters of the flame retarded polyurethane foam composition are mixtures of diisobutyl phenyl phosphate, isobutyl diphenyl phosphate, and triisobutyl phosphate.

The flame-retardant alkyl phenyl phosphate esters of the present invention can be used alone or in combinations thereof. For economic and production reasons the alkyl phenyl phosphate esters of the present invention are often used as mixtures without significantly affecting product performance.

Typically, the flame retarded polyurethane compositions of the present invention have low flame-retardant phosphorous content. The useful flame-retardant phosphorous esters will contain at least about 9 weight percent phosphorus. In one embodiment of the invention, the total amount of alkyl phenyl phosphate ester flame-retardant additive used in the flame retarded polyurethane foam will typically be in the range of about 1 to about 6 weight percent based on the total weight of flame retarded polyurethane foam composition. In another embodiment, the total amount of alkyl phenyl phosphate ester flame-retardant additives used in the flame retarded polyurethane foam will range from about 2 to about 4 weight percent based on the total weight of the flame retarded polyurethane foam composition.

The alkyl phenyl phosphate ester flame retardant additives can be added to the flame retarded polyurethane-foam forming reaction medium, preferably the polyol component thereof, either sequentially in any order or as a blend.

In the present invention, the rigid flame retarded polyurethane foam means a thermosetting foam having a highly crosslinked closed cell structure, as disclosed by Gunter Oertel, "Polyurethane Handbook" (1985), Hanser Publishers (Germany), p.234-313 or Keiji Iwata "Polyurethane Resin Handbook" (1987), Nikkan Kogyo Shinbunsha, p.224-283. The physical properties of the rigid urethane foam are not particularly limited. However, usually, the density is from 10 kg/m³ (0.62 pounds per ft³) to 100 kg/m³ (6.24 pounds per fr³) and the compression strength is within a range of from 50 to 1,000 kPa.

### Surfactant

A surfactant may be used as a foam stabilizer, as the case requires. Surfactants contemplated herein are conventional organic silicon type surfactants, such as nonionic surfactants, for example an organic siloxane-polyoxyalkylene copolymer or a silicone-grease copolymer, or a mixture thereof. The amount of such a surfactant is usually from 0.1 to 10 parts by weight per 100 parts by weight of the polyol.

### Cross-linking agent

A cross-linking agent or a chain extender may be incorporated, as the case requires. The cross-linking agent or the chain extender, may be a polyhydric alcohol having a low molecular weight such as ethylene glycol, 1,4-butanediol or glycerol, an amine polyol having a low molecular weight such as diethanolamine or triethanolamine, or a polyamine such as ethylenediamine, xylylenediamine or methylenebis orthochloroaniline.

The alkyl phenyl phosphate esters flame-retardant additives of the present invention, or mixtures thereof, can be used in conjunction with other conventional additives that are used in polyurethane foam compositions such as catalysts, surfactants, cross linkers, dyes, fillers, etc. In addition, the alkyl phenyl phosphate esters flame-retardant additives of the present invention, or mixtures thereof, can be used in other types of polymer compositions used to produce synthetic polymers such as thermoplastic polymers, including polyurethanes.

The method of the present invention is carried out by rapidly mixing and stirring a mixed liquid having the above starting materials, then injecting it into a suitable container or mold, followed by foaming and molding. The mixing and stirring may be carried out by means of a common stirrer or an exclusive polyurethane foaming machine. As the polyurethane foaming machine, a high pressure, low pressure or spray type machine can be used.

### EXAMPLES

Polyisocyanurate foam insulation products are used as building materials in both residential and commercial structures as thermal insulation in roof and wall systems. Compliance and conformity with building inspection regulations is substantiated with standards generally recognized as standard building practice. The DIN 4102 Standard (Deutsches Institut Fur Normung) is a fire performance of building materials and components that defines in tangible terms the terminology of fire protection, e.g. combustible and non-combustible. Under the DIN 4102 Standard building materials are separated into classes of noncombustible, e.g. A, A1 and A2, and combustible, e.g. B1, B2, and B3, materials and components. Examples 1-30 were tested using the requirements of the DIN 4102 Standard as disclosed by Jürgen Troitzch, "Plastics Flammability Handbook," (2004), Principles, Regulations, Testing and Approval 3rd edition (chapter 10.9 Germany) p.311-318.

DIN 4102 Standard test results for Examples 1-14 are presented in Table 1. Examples 1-14 represent rigid polyurethane foam compositions prepared with Fyrol^{®} PCF (tris(chloropropyl)phosphate available from Supresta, New York, USA) containing polyol (Terate 2541, a polyester polyol available from KoSa Company). DIN 4102 Standard test results for Examples 15-22 are presented in Table 2. Examples 15-22 represent rigid polyurethane foam compositions prepared with Fyrol^{®} PCF containing polyol. DIN 4102 Standard test results for Examples 23-30 are presented in Table 3. Examples 23-30 represent rigid polyurethane foam compositions prepared with polyol free of additional flame retardants (Stepanpol^{®} PS-2352, aromatic polyester polyol, OH# 240 mg KOH/g available from Stepan Company).

**TABLE 1 - PCF-Containing Polyol**

| Examples | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Kosa Terate (OH=234) | 100 parts | 100 parts | 100 parts | 100 parts | 100 parts | 100 parts | 100 parts | 100 parts | 100 parts | 100 parts | 100 parts | 100 parts | 100 parts | 100 parts |
| Fyrol^{®} PCF | 15 parts | 20 parts | | | | | | | | | | | | |
| Di-n-butyl Phenyl Phosphate Product | | | 15 parts | 20 parts | | | | | | | | | | |
| n-Butyl Diphenyl Phosphate Product | | | | | 15 parts | 20 parts | | | | | | | | |
| Diisobutyl Phenyl Phosphate Product | | | | | | | 15 parts | 20 parts | | | | | | |
| Isobutyl Diphenyl Phosphate Product | | | | | | | | | 15 parts | 20 parts | | | | |
| Dihexyl Phenyl Phosphate Product | | | | | | | | | | | 15 parts | 20 parts | | |
| Hexyl Diphenyl Phosphate Product | | | | | | | | | | | | | 15 parts | 20 parts |
| Pentane | 13.0 parts | 13.0 parts | 13.0 parts | 13.0 parts | 13.0 parts | 13.0 parts | 13.0 parts | 13.0 parts | 13.0 parts | 13.0 parts | 13.0 parts | 13.0 parts | 13.0 parts | 13.0 parts |
| Water | 2.5 parts | 2.5 parts | 2.5 parts | 2.5 parts | 2.5 parts | 2.5 parts | 2.5 parts | 2.5 parts | 2.5 parts | 2.5 parts | 2.5 parts | 2.5 parts | 2.5 parts | 2.5 parts |
| Polycat 8 ¹ | 2.0 parts | 2.0 parts | 2.0 parts | 2.0 parts | 2.0 parts | 2.0 parts | 2.0 parts | 2.0 parts | 2.0 parts | 2.0 parts | 2.0 parts | 2.0 parts | 2.0 parts | 2.0 parts |
| Dabco TMR-30 ² | 1.0 parts | 1.0 parts | 1.0 parts | 1.0 parts | 1.0 parts | 1.0 parts | 1.0 parts | 1.0 parts | 1.0 parts | 1.0 parts | 1.0 parts | 1.0 parts | 1.0 parts | 1.0 parts |
| Tegostab B8455 ³ | 1.0 parts | 1.0 parts | 1.0 parts | 1.0 parts | 1.0 parts | 1.0 parts | 1.0 parts | 1.0 parts | 1.0 parts | 1.0 parts | 1.0 parts | 1.0 parts | 1.0 parts | 1.0 parts |
| Kosmos 64 ⁴ | 2.0 parts | 2.0 part | 2.0 parts | 2.0 part | 2.0 part | 2.0 parts | 2.0 part | 2.0 part | 2.0 parts | 2.0 parts | 2.0 parts | 2.0 part | 2.0 part | 2.0 parts |
| MDI⁵ (index 250) (g) | 237.0 | 237.0 | 237.0 | 237.0 | 237.0 | 237.0 | 237.0 | 237.0 | 237.0 | 237.0 | 237.0 | 237.0 | 237.0 | 237.0 |
| Rise Time(s) | 54 | 58 | 59 | 60 | 64 | 68 | 59 | 66 | 62 | 63 | 66 | 67 | 60 | 62 |
| Density | 32.9 | 34.0 | 30.7 | 33.3 | 31.7 | 34.2 | 33.0 | 32.5 | 32.4 | 33.6 | 32.8 | 34.3 | 32.9 | 32.9 |
| B2 Test | B2 | B2 | B2 | B2 | B2 | B2 | B2 | B2 | B2 | B2 | B3 | B2 | B3 | B2/B3 |
| Average Flame Height (cm) | 11.8 | 11.8 | 14.7 | 12.7 | 11.7 | 12.0 | 12.7 | 11.7 | 12.3 | 13.0 | 15.7 | 14.2 | 15.7 | 15.0 |

| | | | | | | | | | | | | | | |
|---|---|---|---|---|---|---|---|---|---|---|---|---|---|---|
| ¹Polycat 8 (tertiary amine available from Air Products And·Chemicals. Inc.) ²Dabco TMR-30 (catalyst, tris-2,4,6-dimethylaminomethylphenol ∼90% available from Air Products and Chemicals. Inc.) ³Tegostab B8512 (surfactant, polyether polydimethylsiloxane available from Degussa Goldshmidt Chemical) ⁴Kosmos 64 (catalyst, potassium acetate available from Degussa) ⁵MDI (polyethylene polyphenylisocyanate available from The Dow Chemical Company) | | | | | | | | | | | | | | |

**TABLE 2 - PCF-Containing Polyol**

| Examples | 15 | 16 | 17 | 18 | 19 | 20 | 21 | 22 |
|---|---|---|---|---|---|---|---|---|
| Kosa Terate 2541 (OH=234) | 100 parts | 100 parts | 100 parts | 100 parts | 100 parts | 100 parts | 100 parts | 100 parts |
| Fyrol^{®} PCF | 4 parts | 6 parts | | | | | | |
| Triethyl Phosphate | | | 4 parts | 6 parts | | | | |
| Di-n-butyl Phenyl Phosphate Product | | | | | 4 parts | 6 parts | | |
| n-Butyl Diphenyl Phosphate Product | | | | | | | 4 parts | 6 parts |
| | | | | | | | | |
| Pentane | 13.0 parts | 13.0 parts | 13.0 parts | 13.0 parts | 13.0 parts | 13.0 parts | 13.0 parts | 13.0 parts |
| Water | 2.5 parts | 2.5 parts | 2.5 parts | 2.5 parts | 2.5 parts | 2.5 parts | 2.5 parts | 2.5 parts |
| Polycat 8 | 2.0 parts | 2.0 parts | 2.0 parts | 2.0 parts | 2.0 parts | 2.0 parts | 2.0 parts | 2.0 parts |
| Dabco TMR-30 | 1.0 parts | 1.0 parts | 1.0 parts | 1.0 parts | 1.0 parts | 1.0 parts | 1.0 parts | 1.0 parts |
| Tegostab B8455 | 1.0 parts | 1.5 parts | 1.5 parts | 1.5 parts | 1.5 parts | 1.5 parts | 1.5 parts | 1.5 parts |
| Kosmos 64 | 2.0 parts | 2.0 parts | 2.0 parts | 2.0 parts | 2.0 parts | 2.0 parts | 2.0 parts | 2.0 parts |
| | | | | | | | | |
| MDI (index 250) (g) | 237.0 | 237.0 | 237.0 | 237.0 | 237.0 | 237.0 | 237.0 | 237.0 |
| Rise Time (s) | - | 53 | 47 | - | - | 50 | 51 | 54 |
| Density (kg/m³) | 28.7 | 28.6 | 27.3 | 27.8 | 27.7 | 27.4 | 28.2 | 28.5 |
| B2 Test | B2 | B2 | B2 | B2 | B2 | B2 | B2 | B2 |
| Average Flame Height (cm) | 13.0 | 13.5 | 13.0 | 14.0 | 14.2 | 14.0 | 14.0 | 14.2 |

**TABLE 3 - PCF-Free Polyol**

| | 23 | 24 | 25 | 26 | 27 | 28 | 29 | 30 |
|---|---|---|---|---|---|---|---|---|
| Stepanpol^{®} PS-2352 | 100 parts | 100 parts | 100 parts | 100 parts | 100 parts | 100 parts | 100 parts | 100 parts |
| Fyrol^{®} PCF | 10 parts | 15 parts | | | | | | |
| Triethyl Phosphate | | | 10 parts | 15 parts | | | | |
| Di-n-butyl Phenyl Phosphate Product | | | | | 10 parts | 15 parts | | |
| n-Butyl Diphenyl Phosphate Product | | | | | | | 10 parts | 15 parts |
| | | | | | | | | |
| Pentane | 13.0 p arts | 13.0 parts | 13.0 parts | 13.0 parts | 13.0 parts | 13.0 parts | 13.0 parts | 13.0 parts |
| Water | 2.5 parts | 2.5 parts | 2.5 parts | 2.5 parts | 2.5 parts | 2.5 parts | 2.5 parts | 2.5 parts |
| Polycat- 8 | 2.0 parts | 2.0 parts | 2.0 parts | 2.0 parts | 2.0 parts | 2.0 parts | 2.0 parts | 2.0 parts |
| Dabco TMR-30 | 1.0 parts | 1.0 parts | 1.0 parts | 1.0 parts | 1.0 parts | 1.0 parts | 1.0 parts | 1.0 parts |
| Tegostab B8455 | 1.5 parts | 1.5 parts | 1.5 parts | 1.5 parts | 1.5 parts | 1.5 parts | 1.5 parts | 1.5 parts |
| Kosinos 64 Kosinos 64 | 2.0 parts | 2.0 parts | 2.0 parts | 2.0 parts | 2.0 parts | 2.0 parts | 2.0 parts | 2.0 parts |
| | | | | | | | | |
| MDl (index 250) (g) | 238.0 | 238.0 | 238.0 | 238. 0 | 238.0 | 238.0 | 238. 0 | 238.0 |
| Rise Time (s) | 62 | 65 | 63 | 64 | 66 | 62 | 63 | 64 |
| Density (kg/m³) | 30.2 | 29.7 | 29.8 | 29.1 | 30.1 | 30.0 | 29.3 | 29.4 |
| B2 Test | B2 | B2 | B2 | B2 | B2 | B2 | B2 | B2 |
| Average Flame Height (cm) | 11.5 | 11.7 | 10:5 | 10.5 | 13:3 | 13.3 | 14.0 | 12.5 |

Examples 31- 33 were prepared with the formulation presented in Table 4, and were tested using a bench-scale test that measures the contribution of pyrolysis gases, temperature profile, and dimensional profile of foam specimens as described by Williams, B., Alessio, and G.R., Levchik, S.V., Development of a Bench-scale and Micro-scale Tests to Correlate with FM 4450 Calorimeter Test, in Polyurethanes 2005 Technical Conference And Trade Fair, Houston, TX, 2005, p.409-414.

**TABLE 4**

| | |
|---|---|
| Stepanpol (OH# 240 mg KOH/g) | 100.0 |
| Flame Retardant | 13.0 |
| Pel-Cat 9540A ⁶ | 2.90 |
| Pel-Cat 9529 ⁷ | 0.30 |
| Polycat -5 ⁸ | 0.40 |
| Tegostab B8512 | 2.00 |
| Water | 0.50 |
| n-Pentane | 22.00 |
| MDI⁹ (Equivalent 136, Functionality 3.0) | 190.8 |
| Index | 275 |

| | |
|---|---|
| ⁶Pel-cat 9540A (potassium octoate available from Pelron Company) ⁷Pel-cat 9529 (potassium acetate available from Pelron Company) ⁸Polycat -5 (blowing catalyst, pentamethyldiethylene triamine available from Air Products and Chemicals, Inc.) ⁹MDI PAPI 580N (polymethylene polyphenylisocyanate available from The Dow Chemical Company) | |

Example 31 was prepared with Fyrol^{®} PCF, Example 32 was prepared with dibutyl phenyl phosphate (low levels of tributyl phenyl phosphate and butyl diphenyl phosphate may be present), Example 33 was prepared with butyl diphenyl phosphate (low levels of dibutyl phenyl phosphate and triphenyl phosphate may be present). The foam density for Example 31-33 was 28-29 kg/m³ (1.75 -1.80 pounds per ft³). The weight percent chloride and phosphorus in Examples 31, 32 and 33, respectively, is displayed in Table 5.

**TABLE 5**

| | % P | % Cl |
|---|---|---|
| Example 31: Fyrol^{®} PCF - Commercial Product | 9.5 | 32.5 |
| Example 32: dibutyl phenyl phosphate | 10.8 | - |
| Example 33: butyl diphenyl phosphate | 10.2 | - |

Specimens of Examples 31-33 were placed on a hot plate preheated to 1100°F for 10 minutes where temperature profiles, total heat released, weight loss and expansion of the foams where assessed. The measurements of degree of expansion (contraction), weight loss, and total heat evolution (heat evolved during incineration of gases from specimens) are presented in Table 6.

Hot Plate Test Data Results For Examples 31-33 is presented in Table 6.

**TABLE 6**

| FR Additive | Max. Temp. | % Expansion | % Wt. Loss | Total Heat |
|---|---|---|---|---|
| Example 31: Fyrol^{®} PCF | 145°C | -25% | 31% | 138 |
| Example 32: dibutyl phenyl phosphate | 156°C | -31% | 30% | 139. |
| Example 33: butyl diphenyl phosphate | 151°C | -12% | 29% | 141 |

As these data show, a select group of alkyl and aryl-containing phosphate esters such as those containing at least one alkyl group with 1 and 6 carbons and one aryl group such as phenyl give flame retardance performance comparable to the most widely used flame retardant additives on the market (e.g., Fyrol^{®} PCF). Although the mixed phosphate ester products with alkyl groups up to 6 carbons can be used, products containing the shorter chain alkyl groups generally show higher efficiency.

## Claims

1. A flame retarded polyurethane foam composition comprising an effective flame retarding amount of at least one phosphate ester additive having the general formula:
(R₁O)ₙP(O)(OR₂)₃₋ₙ,
wherein n is equal to 1 or 2, R₁ is an alkyl group containing from 1 to 6 carbon atoms, and R₂ is a phenyl group, said foam having an isocyanate index of at least about 100.

2. The flame retarded polyurethane foam composition of Claim 1, wherein the phosphate ester is selected from the group consisting of diethyl phenyl phosphate, ethyl diphenyl phosphate, di-n-propyl phenyl phosphate, n-propyl diphenyl phosphate, di-n-butyl phenyl phosphate, n-butyl diphenyl phosphate, di-isobutyl phenyl phosphate, isobutyl diphenyl phosphate, di-n-pentyl phenyl phosphate, n-pentyl diphenyl phosphate, di-n-hexyl phenyl phosphate, n-hexyl diphenyl phosphate.

3. The flame retarded polyurethane foam composition of Claim 2, wherein the phosphate ester is selected from the group consisting of (a) a mixture of n-butyl diphenyl phosphate, di-n-butyl phenyl phosphate, triphenyl phosphate; (b) a mixture of isobutyl diphenyl phosphate, diisobutyl phenyl phosphate, triphenyl phosphate, (c) a mixture of di-n-butyl phenyl phosphate, n-butyl diphenyl phosphate, tributyl phosphate; and (d) a mixture of di-isobutyl phenyl phosphate, isobutyl diphenyl phosphate, triisobutyl phosphate.

4. The flame retarded polyurethane foam composition of Claim 1, wherein the phosphate ester is present in the polyurethane foam forming composition in an amount of about 1 to about 6 weight percent, preferably in an amount of about 2 to about 4 weight percent, based on the total weight of polyurethane foam components.

5. The flame retarded polyurethane foam composition of Claim 1, wherein the polyurethane foam composition has a density of below about 40 kg/m³ (2.50 pounds per ft³)_{.}

6. The flame retarded polyurethane foam composition of Claim 5, wherein the polyurethane foam composition has a density of above about 20 kg/m³ (1.25 pounds per ft³)_{.}

7. The flame retarded polyurethane foam composition of Claim 1, wherein the index of the foam is at least about 200.

8. The flame retarded polyurethane foam composition of Claim 1 further comprising at least one additional component selected from the group consisting of polyisocyanate, polyol, catalyst, blowing agent, surfactant and cross-linker..

9. A process for making a flame retarded polyurethane foam composition according to any one of the claims 1-8 which comprises reacting a polyol with an organic isocyanate in the presence of an effective flame retarding amount of the phosphate ester additive as defined in claim 1, wherein the index of organic isocyanate and polyol components is at least about 100.

## Patentansprüche

1. Flammenhemmende Polyurethanschaumzusammensetzung, aufweisend eine effektive flammenhemmende Menge mindestens eines Phosphatester-Additivs mit der allgemeinen Formel:
(R₁O)ₙP(O)(OR₂)₃₋ₙ,
wobei n gleich 1 oder 2 ist, R₁ eine Alkylgruppe ist, die 1 bis 6 Kohlenstoffatome enthält, und R₂ eine Phenylgruppe ist, wobei der Schaum einen Isocyanat-Index von mindestens ungefähr 100 hat.

2. Flammenhemmende Polyurethanschaumzusammensetzung gemäß Anspruch 1, wobei der Phosphatester aus der Gruppe bestehend aus Diethylphenylphosphat, Ethyldiphenylphosphat, Di-n-propylphenylphosphat, n-Propyldiphenylphosphat, Di-n-butylphenylphosphat, n-Butyldiphenylphosphat, Diisobutylphenylphosphat, Isobutyldiphenylphosphat, Di-n-pentylphenylphosphat, n-Pentyldiphenylphosphat, Di-n-Hexylphenylphosphat, n-Hexyldiphenylphosphat ausgewählt ist.

3. Flammenhemmende Polyurethanschaumzusammensetzung gemäß Anspruch 2, wobei der Phosphatester aus der Gruppe bestehend aus (a) einer Mischung aus n-Butyldiphenylphosphat, Di-n-butylphenylphosphat, Triphenylphosphat, (b) einer Mischung aus Isobutyldiphenylphosphat, Diisobutylphenylphosphat, Triphenylphosphat, (c) einer Mischung aus Di-n-butylphenylphosphat, n-Butyldiphenylphosphat, Tributylphosphat, und (d) einer Mischung aus Diisobutylphenylphosphat, Isobutyldiphenylphosphat, Triisobutylphosphat ausgewählt ist.

4. Flammenhemmende Polyurethanschaumzusammensetzung gemäß Anspruch 1, wobei der Phosphatester in der polyurethanschaumbildenden Zusammensetzung in einer Menge von ungefähr 1 bis 6 Gew.-%, vorzugsweise in einer Menge von ungefähr 2 bis ungefähr 4 Gew.-% auf der Grundlage des Gesamtgewichts von Polyurethanschaumkomponenten vorhanden ist.

5. Flammenhemmende Polyurethanschaumzusammensetzung gemäß Anspruch 1, wobei die Polyurethanschaumzusammensetzung eine Dichte von weniger als ungefähr 40 kg/m³ (2,50 Pfund pro Fuß³) aufweist.

6. Flammenhemmende Polyurethanschaumzusammensetzung gemäß Anspruch 5, wobei die Polyurethanschaumzusammensetzung eine Dichte von mehr als ungefähr 20 kg/m³ (1,25 Pfund pro Fuß³) aufweist.

7. Flammenhemmende Polyurethanschaumzusammensetzung gemäß Anspruch 1, wobei der Index des Schaums mindestens etwa 200 beträgt.

8. Flammenhemmende Polyurethanschaumzusammensetzung gemäß Anspruch 1, ferner mindestens eine zusätzliche Komponente aufweisend, die aus der Gruppe bestehend aus Polyisocyanat, Polyol, Katalysator, Treibmittel, Tensid und Vernetzer ausgewählt ist.

9. Verfahren zum Bilden einer flammenhemmenden Polyurethanschaumzusammensetzung gemäß einem der Ansprüche 1 bis 8, das das Umsetzen eines Polyols mit einem organischen Isocyanat in der Gegenwart einer effektiven flammenhemmenden Menge des Phosphatester-Additivs wie in Anspruch 1 definiert aufweist, wobei der Index von organischen Isocyanat- und Polyolkomponenten mindestens etwa 100 beträgt.

## Revendications

1. Composition de mousse de polyuréthane ignifugée comprenant une quantité ignifugeante efficace d'au moins un additif de type ester de phosphate de formule générale :
(R₁O)ₙP(O)(OR₂)₃₋ₙ,
dans laquelle n est égal à 1 ou 2, R₁ est un groupe alkyle contenant 1 à 6 atomes de carbone, et R₂ est un groupe phényle, ladite mousse ayant un indice d'isocyanate d'au moins environ 100.

2. Composition de mousse de polyuréthane ignifugée selon la revendication 1, dans laquelle l'ester de phosphate est choisi dans le groupe constitué par le phosphate de diéthyle et de phényle, le phosphate d'éthyle et de diphényle, le phosphate de di-n-propyle et de phényle, le phosphate de n-propyle et de diphényle, le phosphate de di-n-butyle et de phényle, le phosphate de n-butyle et de diphényle, le phosphate de di-isobutyle et de phényle, le phosphate d'isobutyle et de diphényle, le phosphate de di-n-pentyle et de phényle, le phosphate de n-pentyle et de diphényle, le phosphate de di-n-hexyle et de phényle, le phosphate de n-hexyle et de diphényle.

3. Composition de mousse de polyuréthane ignifugée selon la revendication 2, dans laquelle l'ester de phosphate est choisi dans le groupe constitué par (a) un mélange de phosphate de n-butyle et de diphényle, phosphate de di-n-butyle et de phényle, phosphate de triphényle ; (b) un mélange de phosphate d'isobutyle et de diphényle, phosphate de di-isobutyle et de phényle, phosphate de triphényle ; (c) un mélange de phosphate de di-n-butyle et de phényle, phosphate de n-butyle et de phényle, phosphate de tributyle ; et (d) un mélange de phosphate de di-isobutyle et de phényle, phosphate d'isobutyle et de diphényle, phosphate de triisobutyle.

4. Composition de mousse de polyuréthane ignifugée selon la revendication 1, dans laquelle l'ester de phosphate est présent dans la composition formant une mousse de polyuréthane en une quantité d'environ 1 à environ 6 pour cent en poids, de préférence en une quantité d'environ 2 à environ 4 pour cent en poids, sur la base du poids total des composants de la mousse de polyuréthane.

5. Composition de mousse de polyuréthane ignifugée selon la revendication 1, dans laquelle la masse volumique de la composition de mousse de polyuréthane est inférieure à environ 40 kg/m³ (2,50 livres par pied³).

6. Composition de mousse de polyuréthane ignifugée selon la revendication 5, dans laquelle la masse volumique de la composition de mousse de polyuréthane est supérieure à environ 20 kg/m³ (1,25 livre par pied³).

7. Composition de mousse de polyuréthane ignifugée selon la revendication 1, dans laquelle l'indice de la mousse est d'au moins environ 200.

8. Composition de mousse de polyuréthane ignifugée selon la revendication 1, comprenant en outre au moins un composant supplémentaire choisi dans le groupe constitué par un polyisocyanate, un polyol, un catalyseur, un agent d'expansion, un tensioactif et un agent de réticulation.

9. Procédé de préparation d'une composition de mousse de polyuréthane ignifugée selon l'une quelconque des revendications 1 à 8, comprenant la réaction d'un polyol avec un isocyanate organique en présence d'une quantité ignifugeante efficace de l'additif de type ester de phosphate selon la revendication 1, dans lequel l'indice des composants isocyanate organique et polyol est d'au moins environ 100.
